# EUROPEAN PATENT APPLICATION

(11) **EP 2 317 500 A2**
(43) Date of publication of application: **04.05.2011**
(21) Application number: 10164116.5
(22) Date of filing: 27.05.2010
(51) Int. Cl.: G09G 3/34

(54) **Display Apparatus and Backlight Assembly and Image Processing Method Thereof**

(30) Priority: 30.10.2009 KR 20090104007
(71) Applicant: SAMSUNG ELECTRONICS CO., LTD., Suwon-si, Gyeonggi-do (KR)
(72) Inventor: YUN, Sang-un, Seoul (KR); SEONG, Ki-bum, Gyeonggi-do (KR); PARK, Jung-jin, Gyeonggi-do (KR); CHOI, Nak-won, Incheon (KR); SUNG, Jun-ho, Seoul (KR)
(74) Representative: Walaski, Jan Filip

(57) **Abstract**

A display apparatus, backlight assembly and method for displaying an image is capable of compensating for non-uniformity of a light guiding plate. The display apparatus includes a liquid crystal display (LCD) panel on which an image is displayed; a light guiding unit which is placed adjacent to the LCD panel and includes a plurality of light guide plates for guiding incident light to the LCD panel; a plurality of light emitting diode (LED) modules which are individually arranged at at least one lateral side of the plurality of light guide plates and which emit light to the other lateral sides, respectively; and a video processor which changes brightness of an image displayed on a compensation area of the LCD panel that corresponds to an edge region of the light guide plate to compensate brightness at the edge region. The non-uniformity of the divided light guide plates is reduced.

## Description

The present invention relates to a display apparatus and a backlight assembly and image-displaying method thereof, and more particularly, to a display apparatus including a light guiding plate, and a backlight assembly and image-displaying method thereof.

A backlight unit used in a liquid crystal display (LCD) apparatus is broadly divided into a direct-type and an edge-type according to positions of a light source.

A direct-type backlight unit is placed adjacent to an LCD panel and directly emits light to an entire surface of the LCD panel, which includes a reflective plate placed under a lamp and reflecting light; an optical sheet placed above the lamp that condenses and diffuses the emitted light; etc. Further, the direct-type backlight unit is capable of including many light sources and is generally used for a large-sized LCD apparatus that requires high brightness since it has high efficiency of using the light.

On the other hand, an edge-type backlight unit generally includes light sources at a lateral side of a light guide plate that guides light from the light source toward the LCD panel. The edge-type backlight unit deteriorates in brightness as the size of the LCD apparatus becomes larger, but the edge-type backlight unit is advantageous in that it is thinner and therefore provides for a thinner LCD apparatus. The light guide plate scatters light and makes it uniform before it is transmitted to the display surface. Also, the reflective plate is placed under the light guide plate. Further, a pair of prisms for changing the direction the light travels and condensing the light, and a diffusing sheet for enhancing uniformity of incident light to the LCD panel may be provided on a top surface of the light guide plate.

Accordingly, one or more exemplary embodiments provide a display apparatus capable of compensating for non-uniformity of a light guiding plate, and a backlight assembly and image-displaying method thereof.

One exemplary embodiment is to provide a display apparatus capable of improving a dark region generated between separated light guide plates, as well as a backlight assembly and image-displaying method thereof.

Another exemplary embodiment provides a display apparatus capable of reducing production costs of a display apparatus since it performs video processing to provide a uniform brightness level without a hardware element such as an optical sheet, as well as a backlight assembly and image-displaying method thereof.

Yet another exemplary embodiment provides a display apparatus that includes a light guide plate improving brightness and enabling local dimming, as well as a backlight assembly and image-displaying method thereof.

The foregoing and/or other exemplary embodiments can be achieved by providing a display apparatus including: a liquid crystal display (LCD) panel on which an image is displayed; a light guiding unit which is placed adjacent to the LCD panel and includes a plurality of light guide plates for guiding incident light to the LCD panel; a plurality of light emitting diode (LED) modules which are individually arranged at one lateral side of the plurality of light guide plates and emit light to the other lateral sides, respectively; and a video processor which changes a brightness level of an image displayed on a compensation area of the LCD panel which corresponds to an edge region of the light guide plate in order to compensate for a non-uniform level of brightness at the edge region.

In one exemplary embodiment, the light guide plate may have an oblong shape, and the video processor may increase a brightness level of an image displayed on the compensation area corresponding to a top portion at a lateral side opposite to an incident lateral side of the light guide plate where light from the LED module enters.

In another exemplary embodiment, the light guide plate may have an oblong shape, and the video processor may decrease a brightness level of an image displayed on the compensation area corresponding to a top portion at an incident lateral side of the light guide plate where light from the LED module enters.

In a further exemplary embodiment, the LCD panel may have an oblong shape, the light guiding unit may include a plurality of light guide plates divided in a length-wise direction of the LCD panel, and the LED module may be arranged at a length-wise lateral side of the light guide plate.

In yet another exemplary embodiment, the light guiding unit may include a plurality of light guide plates divided in the form of a grid pattern.

In a still further exemplary embodiment, the display apparatus may further include a light source driver to supply power to the LED modules and a light source controller to control the light source driver so that light from the LED modules can be scanned in sequence.

The display apparatus may further include a light source driver to supply power to the LED modules and a light source controller to control the light source driver so that power can be supplied to the LED modules on the basis of an image displayed on the LCD panel.

Another exemplary embodiment provides an image processing method of a display apparatus including a liquid crystal display (LCD) panel on which an image is displayed, a plurality of light guide plates placed adjacent to the LCD panel which guide incident light to the LCD panel, and a plurality of light emitting diode (LED) modules individually arranged at one lateral side of each of the plurality of light guide plates and emitting light to the lateral sides, respectively, the method including determining a compensation area of the LCD panel corresponding to an edge region of the light guide plate; changing a brightness level of an image displayed on the compensation area to compensate for a non-uniform level of brightness at the edge region.

In another exemplary embodiment, a backlight assembly includes: a light guiding unit which is placed adjacent to a display panel, and which includes a plurality of light guide plates for guiding incident light to the LCD panel; a plurality of light emitting diode (LED) modules which are individually arranged at one lateral side of each of the plurality of light guide plates and emit light to the other lateral sides, respectively; and a video processor which compensates for non-uniformity of a brightness level at an edge region of the light guide plate when the plurality of light guide plates are used for illuminating the display panel.

The above and/or other aspects will become apparent and more readily appreciated from the following description of the exemplary embodiments, taken in conjunction with the accompanying drawings, in which:
FIG. 1 is a block diagram of a display apparatus according to an exemplary embodiment;
FIG. 2 is a perspective exploded view of a display apparatus, including a liquid crystal display (LCD) panel, a light guiding unit and a light emitting diode (LED) module, according to one exemplary embodiment;
FIG. 3 shows a sectional view of a light guiding unit of the display apparatus taken along line III-III of FIG. 2 along with a graph illustrating the a brightness level that corresponds to the light guiding plates of the light guiding unit, according to one exemplary embodiment;
FIG. 4 is a series of graphs of a level of brightness in an image in the display apparatus, according to one exemplary embodiment;
FIG. 5 is a perspective view of a light guiding unit and an LED module, according to another exemplary embodiment;
FIG. 6 is a flowchart explaining a video processing method for the display apparatus, according to an exemplary embodiment; and
FIG. 7 is a block diagram of a backlight assembly, according to an exemplary embodiment.

Below, exemplary embodiments will be described in detail with reference to accompanying drawings so as to be easily understood by a person having ordinary skill in the art. The exemplary embodiments may be presented in various forms without being limited to the embodiments set forth herein. Descriptions of well-known parts are omitted for clarity, and like reference numerals refer to like elements throughout.

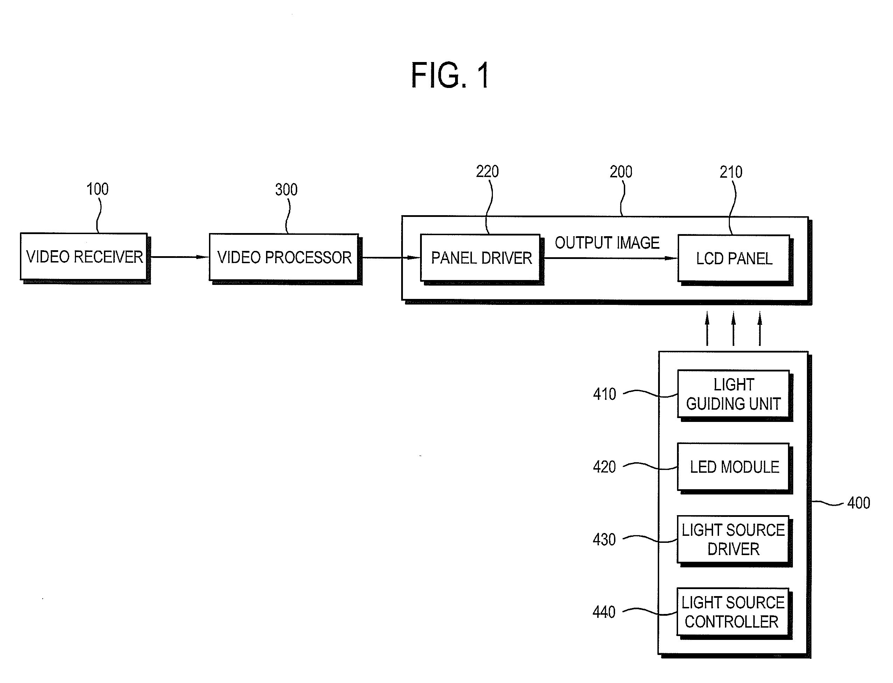

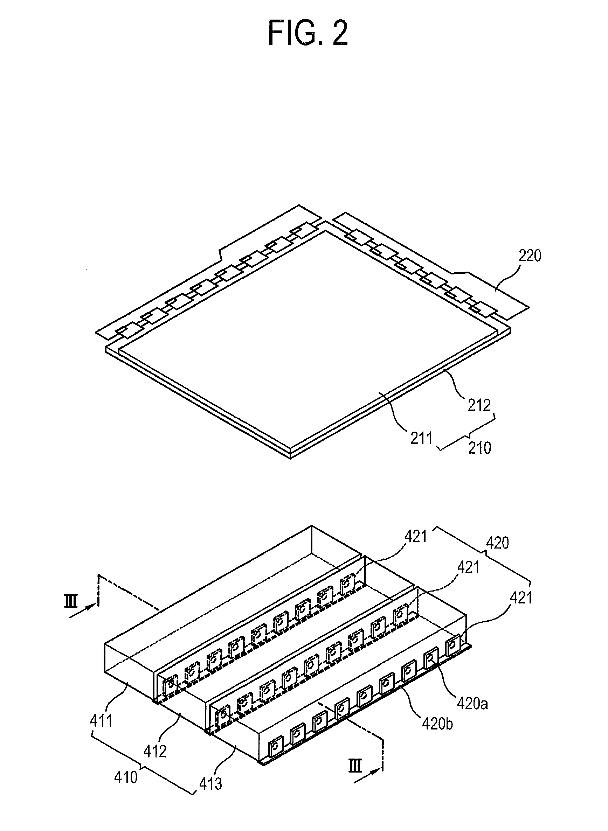

FIG. 1 is a block diagram of a display apparatus according to an exemplary embodiment, and FIG. 2 is a perspective exploded view of a liquid crystal display (LCD) panel, a light guiding unit and a light emitting diode (LED) module contained in the display apparatus. As shown therein, the display apparatus includes a video receiver 100, an LCD panel unit 200 including a panel driver 220 and an LCD panel 210, a video processor 300, and a backlight assembly 400 emitting light to the LCD panel 210. The backlight assembly 400 includes a light guiding unit 410, an LED module 420, a light source driver 430 driving the LED module 420, and a light source controller 440 for controlling the light source driver 430. The display apparatus may include a television receiving and processing a broadcasting signal, a monitor connected to a computer system, and a large-sized display apparatus having the LCD panel 210.

In the case that the television is used as the display apparatus, the video receiver 100 may receive a radio frequency (RF) signal transmitted from a broadcasting station (not shown) wirelessly, or receive a video signal based on composite video, component video, S-video, Scart, high definition multimedia interface (HDMI) standards, or the like. Further, in the case that the monitor for the computer system is used as the display apparatus, the video receiver 100 may receive a video signal based on D-SUB capable of transmitting an RGB signal of a VGA type, or a video signal based on digital video interactive (DVI), HDMI, or the like standards.

As shown in Fig. 2, the LCD panel 210 is a flat display panel including a liquid crystal layer (not shown) filled between a first substrate 211 and a second substrate 212. The LCD panel is not a self-emissive panel, so it cannot emit light by itself. Thus, the LCD panel 210 receives light from the backlight assembly 400 in order to display an image. In one exemplary embodiment, the LCD panel 210 has a rectangular shape.

The panel driver 220 displays an image received from the video processor 300 on the LCD panel 210. The panel driver 220 includes a gate driver (not shown) and a data driver (not shown) in a form of an integrated chip (IC) for applying a video signal to each pixel (not shown) of the LCD panel 210, and is connected to the video processor 300 through a flexible film. The panel driver 220 and the video processor 300 may be provided on one circuit board, or provided in respective different circuit boards and then connected by a connector.

The video processor 300 performs preset various signal processes with respect to a video signal transmitted from the video receiver 100. The kind of signal processes performed by the video processor 300 is not limited to a certain process, and may include, for example, decoding, encoding, deinterlacing, frame rate conversion, scaling, noise reduction for improving image quality, detail enhancement. The video processor 300 may be achieved by an individual configuration for performing each process independently or as an integrated configuration for performing various processes. The video processor 300 in this exemplary embodiment compensates for a non-uniform level of brightness of an input image based on the shape and arrangement of the light guiding unit 410 described below. Specifically, the video processor 300 decreases or increases a gray scale of an input video signal so as to compensate for the non-uniform level of brightness of an image displayed on the LCD panel 210.

As shown in FIG. 2, the light guiding unit 410 is arranged adjacent to the LCD panel 210, and includes a plurality of light guide plates 411, 412 and 413 guiding incident light toward the LCD panel 210. The plurality of light guide plates 411, 412 and 413 are divided in a length-wise direction of the LCD panel 210, and each have an oblong shape of which the width is shorter than the length. Here, the light guide plates 411, 412 and 413 may have one size or different sizes from one another. A plurality of LED modules 421, 422 and 423 are arranged on one lateral side of each of the plurality of light guide plates 411, 412 and 413, respectively, and emit light to the respective lateral sides. In this embodiment, the LED modules 421, 422 and 423 are arranged in parallel with the length-wise direction of the light guide plates 411, 412 and 413 and emit light to the length-wise lateral sides of the light guide plates 411, 412 and 413. The light guide plates 411, 412 and 413 may include a prism pattern, a reflective pattern or the like to effectively guide light toward the LCD panel 210. There is no limit to the material, pattern and forming method of the light guide plates 411, 412 and 413, and any well-known or unknown material, pattern and forming method may be applied thereto.

Conventionally, an edge-type backlight assembly with an edge-type light source includes one light guide plate corresponding to the size of the LCD panel that is placed in the back of the LCD panel. In this type of backlight assembly, there is a limit to the number of LED modules that can be arranged at the lateral sides of the light guide plate, and thus the brightness of the edge-type backlight assembly is lower than that of a direct-type backlight assembly. However, according to an exemplary embodiment, the plurality of light guide plates 411, 412 and 413 and the plurality of LED modules 421, 422 and 423 arranged at the lateral sides of the light guide plates 411, 412 and 413 are provided to enhance the brightness of the edge type backlight assembly and to reduce production costs due to the number of LED modules. Since the light guiding unit 410 includes the divided light guide plates 411, 412 and 413, and the LED modules 421, 422 and 423 are arranged in not only a corner area of the LCD panel 210 but also a center area, the level of brightness of this backlight assembly is more improved than that of the existing edge-type backlight assembly.

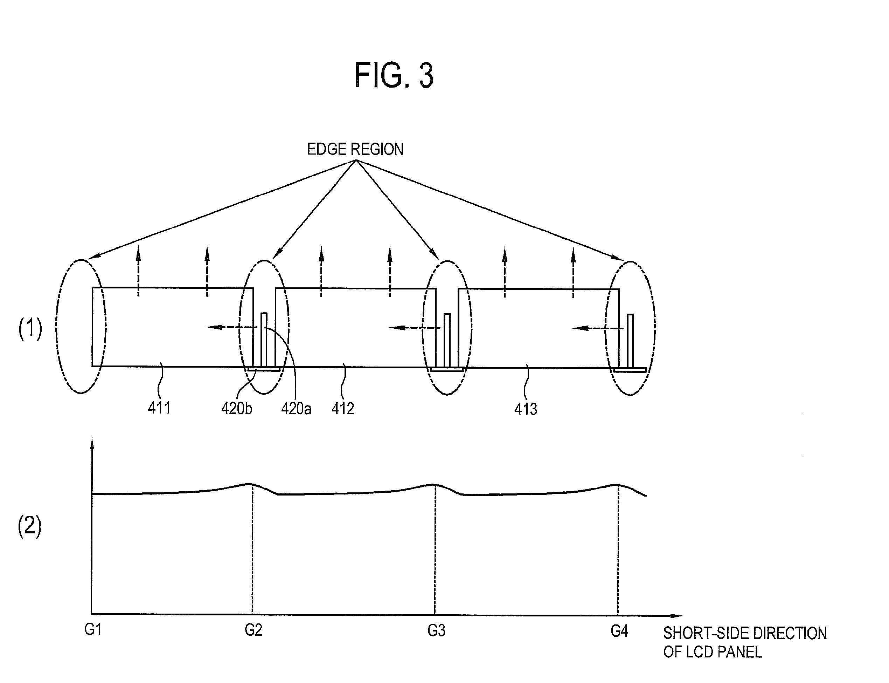

Each of the LED modules 421, 422 and 423 includes a plurality of LEDs 420a, and a circuit board 420b having a circuit pattern (not shown) to supply power to the LEDs 420a and supporting the LED 420a. FIG. 3 shows a sectional view of the light guiding unit taken along line III-III of FIG. 2, and a graph of corresponding levels of brightness for each light guide plate 411, 412 and 413. As shown in the sectional view (1) of FIG. 3, the LED 420a in this embodiment are arranged in between light guide plates 411, 412 and 413 or an edge region thereof and emits light horizontally as shown by the directional arrow to the lateral sides of the light guide plates light guide plates 411, 412 and 413. The the circuit board 420b is formed perpendicularly to the LED 420a. The circuit board 420b is arranged in parallel with the LCD panel 210 in order to reduce a gap between the light guide plates 411, 412 and 413 and easily support the LED modules 421, 422 and 423. The circuit board 420b is fastened to an accommodating member (not shown) that accommodates the light guide plates 411, 412 and 413 and various optical sheets (not shown). A gap between the LED 420a and the light guide plate 411, 412 and 413 may be set based on brightness uniformity and deformation of the light guide plates 411, 412 and 413 due to deterioration of the LED 420a.

As shown herein in Fig. 3 in the graph of levels of brightness (2) corresponding to the light guide plates, an edge portion of the light guiding plates 411, 412 and 413 includes a gap between the adjacent light guide plates 411, 412 and 413 is defined as an edge region G1, G2, G3, G4. The LED modules 421, 422 and 423 according to this exemplary embodiment emit light from the lateral sides of the light guide plates 411, 412 and 413 in a second edge region G2, a third edge region G3 and a fourth edge region G4. The graph (2) of FIG. 3 shows levels of brightness of light emitted from the backlight assembly 400 to the LCD panel 210. When light is emitted from the LED modules 421, 422 and 423, the light is transferred from an incident lateral side of the second edge region G2, an incident lateral side of the third edge region G3 and an incident lateral side of the fourth edge region G4 to the lateral side opposite the incident lateral side. As shown therein, light decreases in brightness as it travels more distance. For example, a top portion of the light guide plate may be dark at the sides of the light guide plates 411, 412 and 413 opposite to the incident lateral sides where the light enters from the LED modules 421, 422 and 423. On the other hand, a top portion of the light guide plate may be bright at the incident lateral sides of the light guide plates 411, 412 and 413 where the light enters from the LED modules 421, 422 and 423. That is, the level of brightness of the light emitted from the backlight assembly 400 to the LCD panel may not be uniform.

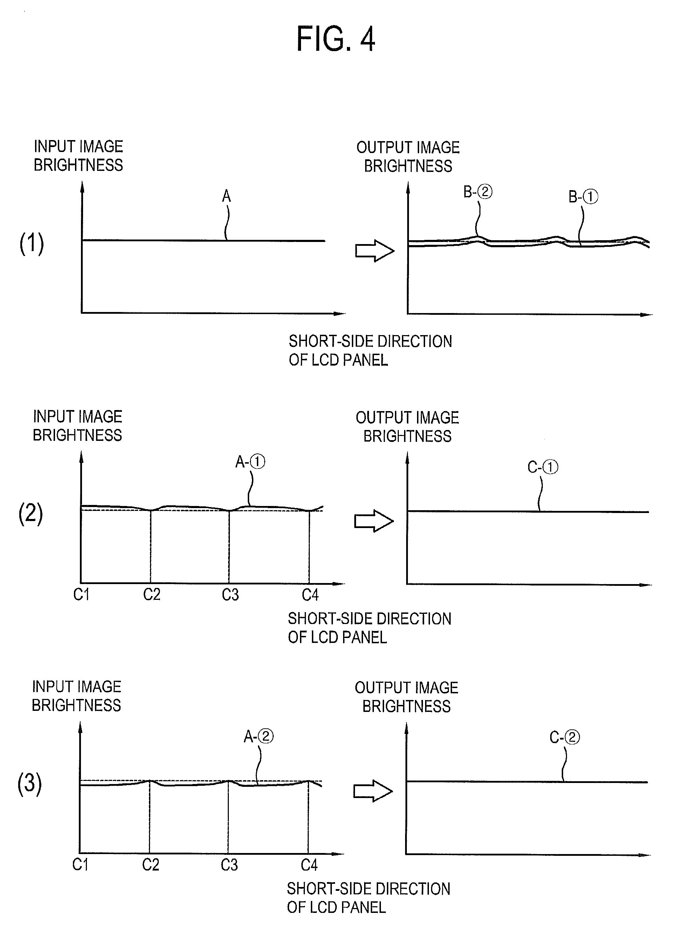

FIG. 4 is a series of graphs of image brightness in the display apparatus, in which an X-axis represents a distance in a width-wise direction of the LCD panel 210 and a Y-axis represents the levels of brightness of input and output images. Referring to the graphs, and as explained in detail below, the brightness of an image is varied depending on the arrangement of the light guide plates 411, 412 and 413.

Graph (1) of FIG. 4 shows the level of brightness of an original output image when an input image having brightness of a certain gray scale level, A, is input and light thereof is transferred through the plurality of light guide plates 411, 412 and 413. That is, since the level of brightness is not uniform due to the structure of the light guide plates 411, 412 and 413 as shown in Graph (2) of FIG. 3, the output image may include a portion (see B-①) darker than that of the input image or a portion (see B-②) brighter than that of the input image.

To make the level of brightness uniform, the video processor 300 compensates, or adjusts, the level of brightness of an image in a compensation area C on the LCD panel 210 corresponding to the top portion at the edge regions G1, G2, G3 and G4 which showed abnormally bright or dark areas, as illustrated in Graph (2) of Fig. 3. Referring to Graph (2) of FIG. 4, when the original output image may include a portion darker than that of the input image, as shown in B-①, the video processor 300 increases the gray scale of the image displayed on the compensation areas C1, C2 and C3 corresponding to the dark portions, and inputs it into the LCD panel 210. That is, the gray scale A-①) of the input image is changed differently from the gray scale of an original image input from the video receiver 100 (dotted line, A), and the level of brightness of the image displayed on the compensation areas C1, C2 and C3 corresponding to the dark portions is increased to improve the level of brightness of the dark portions. Through this compensation of brightness for an image, the output image C-① has a uniform level of brightness like the original input image A.

Referring to Graph (3) of FIG. 4, when the original output image may include a portion brighter than that of the input image as shown in B-②, the video processor 300 decreases the gray scale of the image displayed on the compensation areas C2, C3 and C4 corresponding to the bright portions, and inputs it into the LCD panel 210. That is, an image obtained by decreasing the level of brightness of the original image A at the compensation areas C2, C3 and C4 is used as an input image A-②. Through this compensation for an image, the output image C-② has uniform levels of brightness like the original input image A.

The video processor 300 may change the gray scale of an image on the basis of information about the compensation areas C1, C2, C3 and C4, previously stored or received from an exterior. The video processor 300 may change the gray scale of an image at a certain limited area, but it is not limited thereto. Alternatively, the video processor 300 may change the level of brightness of an image on the basis of a function that calculates the level of brightness of an output image with regard to an input image by letting the lengths of the light guiding plates 411, 412 and 413 where light is guided be variables. According to an exemplary embodiment, non-uniform levels of brightness due to the divided light guide plates 411, 412 and 413 is improved by video processing, and thus there is no need for additional optical sheets, thereby reducing production costs and making the backlight assembly 400 and the display apparatus thinner.

According to another exemplary embodiment, the LED modules 421, 422 and 423 may be arranged not only on one lateral side but on a plurality of lateral sides of the light guide plates 411, 412 and 413. According to the size of the LCD panel 210, or according to required level of brightness of the backlight assembly, the number of LED modules for emitting light to each of the light guide plates 411, 412 and 413 may be adjusted. In this case, the compensation area is changed, and thus the video processor 300 also compensates an image in consideration of the changed compensation area.

The level of brightness of an image may be compensated by the panel driver 220 as well as the video processor 300. That is, if the only information available pertains to the compensation areas C1, C2, C3 and C4, it is possible for the panel driver 220 to change the gray scale of an image. The panel driver 220 may use a lookup table to change the gray scale of an image. The lookup table contains compensation gray scales corresponding to the gray scales of the input image displayed on the compensation areas.

In another exemplary embodiment, the backlight assembly 400 may further include a diffusion plate, a prism film, a protection film, or the like optical film, which are not shown. Further, a reflective film may be further provided on the bottom interior surface of the light guiding unit 410. The optical film diffuses light emitted from the light guiding plates 411, 412 and 413 uniformly, and the reflective film reflects the light emerging from the bottom of the LCD panel 210 back toward the top of the LCD panel 210.

Referring back to FIG. 1, the backlight assembly 400 includes the light source driver 430 which supplies power to the LCD modules 421, 422 and 423, and the light source controller 440 for controlling the light source driver 430.

The light source driver 430 may include a converter, a transformer, various diodes, a capacitor, etc. to change a level of input power and supply it to each of the LED modules 421, 422 and 423. The light source driver 430 may include any known or unknown power supplying unit.

The light source controller 440 outputs a control signal for controlling power input to the LED modules 421, 422 and 423 to the light source driver 430. The control signal may include a scanning signal for driving the LED modules 421, 422 and 423 in sequence, and a dimming signal for performing local dimming with the LED modules 421, 422 and 423. To perform the local dimming with the LED modules 421, 422 and 423, the light source controller 440 may receive information about the gray scale of an image input from the video processor 300.

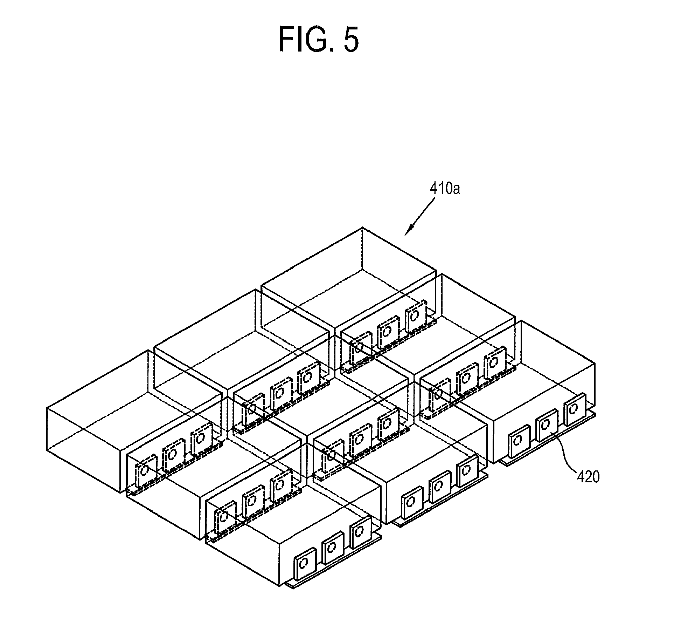

FIG. 5 is a perspective view of a light guiding unit 410 and an LED module 420, according to another exemplary embodiment.

The light guiding unit 410 in this embodiment includes a plurality of light guide plates divided in the form of a grid pattern. Each one of the light guide plates 410a is smaller than each of the light guide plates 411, 412 and 413 of FIG. 2, and the local dimming can be more effectively performed since it is possible to drive the LED modules individually in a length-wise or column direction as well as a width-wise or row direction. The light source controller 440 may receive information about an image from the video processor 300, and it is thus possible to perform temporal and spatial control of the power supplied to the LED module 420 in time and space.

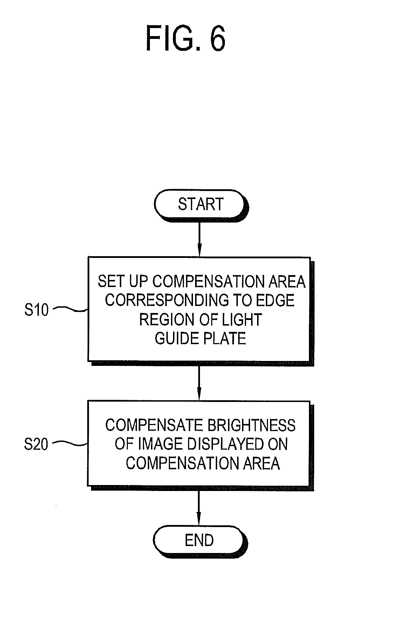

FIG. 6 is a flowchart for explaining a video processing method used in the display apparatus of FIG. 1, according to one exemplary embodiment. Referring to FIG. 6, the video processing method according to an exemplary embodiment will be described as follows. First, at operation S10, the compensation areas C1, C2, C3 and C4 of the LCD panel 210 are set, the compensation areas corresponding to the edge regions G1, G2, G3 and G4 of the light guide plates 411, 412 and 413. The compensation areas C1, C2, C3 and C4 may be set according to the shape and properties of the light guide plates 411, 412 and 413. No matter what the edge regions G1, G2, G3 and G4 of the light guide plates 411, 412 and 413 are determined to be, an area needing no compensation is not set as the compensation area. Further, the compensation area may be changed according to the number and arrangement of the LED modules 421, 422 and 423 that emit light at the lateral sides of the light guide plates 411, 412 and 413. That is, an area needing compensation is set as the compensation area, and the compensation area may be set when the display apparatus is manufactured or set by a user's selection when the display apparatus is launched. Also, the compensation area may be set by sensing the level of brightness of light emitted to the LCD panel 210 after supplying the power to the LED modules 421, 422 and 423 and determining a portion which needs brightness compensation, based on the sensed level of brightness, or set through image processing using photographed light.

At operation S20, the video processor 300 compensates for the level of brightness of an image displayed on the compensation areas C1, C2, C3 and C4 on the basis of information about the compensation areas C1, C2, C3 and C4.

The video processor 300 increases the level of brightness of an image corresponding to the top portion of the light guide plates 411, 412 and 413 at the lateral sides opposite to the incident sides where the light from the LED modules 421, 422 and 423 enters, or decreases the level of brightness of an image corresponding to the top portion at the incident sides where the light enters.

The LED modules 421, 422 and 423 can be arranged not only at the edges of the LCD panel 210 but also at a center area where an image is displayed, so that the backlight assembly 400 can drive the LED modules 421, 422 and 423 to perform scanning or local dimming.

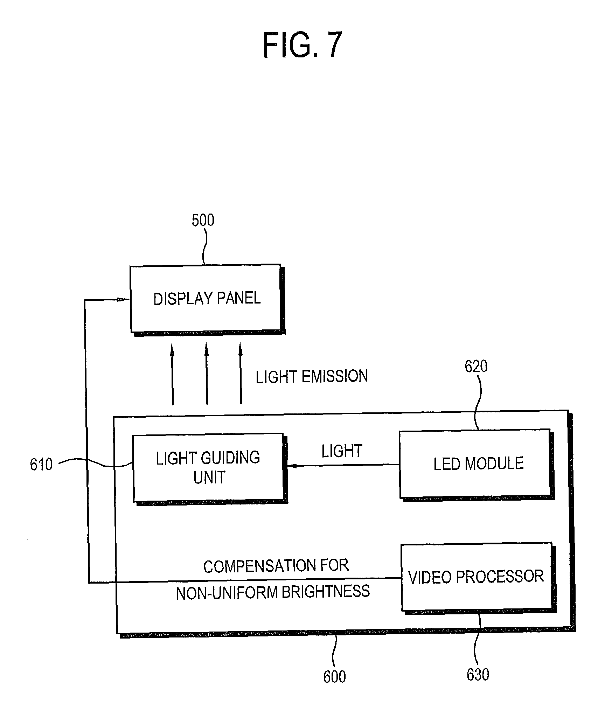

FIG. 7 is a block diagram of a backlight assembly according to an exemplary embodiment. As shown therein, the backlight assembly 600 includes a light guiding unit 610, an LED module 620 and a video processor 630.

The display panel 500 includes an LCD panel with a liquid crystal layer (not shown), which is not a self-emissive panel. Accordingly, the display panel 500 receives light from the backlight assembly 600 to display an image.

The light guiding unit 610 is arranged adjacent to the display panel 500 that displays an image, and includes a plurality of light guide plates for guiding incident light to the display panel 500. The plurality of LED modules 620 are individually arranged at one lateral side of each of the plurality of light guide plates, and emit light to the other lateral sides, respectively. In this embodiment, the light guiding unit 610 and the LED module 620 may include the foregoing configurations shown in FIGs. 2 and 5.

The video processor 630 compensates non-uniformity of the level of brightness due to the edge region of the light guide plate when the plurality of light guide plates are used for illuminating the display panel 500. The video processor 630 may output data compensated with respect to the non-uniformity of the level of brightness to the display panel 500. The video processor 630 may compensate the non-uniformity of the level of brightness by calculating a compensation gray scale for compensating the non-uniformity of the level of brightness with respect to the gray scale of an image displayed on the display panel 500 according to areas, or using a lookup table that contains a compensation gray scale corresponding to the gray scale of the image according to areas. To improve the uniformity of the level of brightness in the edge region, the video processor 630 adjusts an image in a corresponding area on the basis of information about the edge region of the light guide plate. The compensation for the non-uniformity of the level of brightness in the video processor 630 may include the video processing methods described with reference to FIGs. 3, 4 and 6.

As described above, there is provided a display apparatus capable of compensating for non-uniformity of a light guiding plate, and a backlight assembly and image-displaying method thereof.

According to an exemplary embodiment, there is provided a display apparatus capable of improving a dark region that exists between separated light guide plates, as well as a backlight assembly and image display method thereof.

Also, there is provided a display apparatus capable of reducing production costs of a display apparatus since it performs video processing to provide uniform levels of brightness without a hardware element such as an optical sheet, as well as a backlight assembly and image-displaying method thereof.

Further, there are provided a display apparatus that includes a light guide plate improving levels of brightness and enabling local dimming, as well as a backlight assembly and image-displaying method thereof.

Although a few exemplary embodiments have been shown and described, it will be appreciated by those skilled in the art that changes may be made in these embodiments without departing from the principles of the invention, the scope of which is defined in the appended claims.

## Claims

1. A display apparatus comprising:
a liquid crystal display (LCD) panel;
a light guiding unit which is placed adjacent to the LCD panel and which comprises a plurality of light guide plates for guiding incident light to the LCD panel;
a plurality of light emitting diode (LED) modules which are individually arranged at at least one lateral side of the plurality of light guide plates, and which emit light into the light guiding unit; and
a video processor which changes a level of brightness of an image to be displayed on a compensation area of the LCD panel, the compensation area corresponding to an edge region of the plurality of light guide plates.

2. The display apparatus according to claim 1, wherein the video processor increases a level of brightness of an image displayed on a compensation area corresponding to a top portion at a lateral side opposite to an incident lateral side of the light guide plate where light from LED module enters.

3. The display apparatus according to claim 1, wherein the video processor decreases a level of brightness of an image displayed on a compensation area corresponding to a top portion at an incident lateral side of the light guide plate where light from the LED module enters.

4. The display apparatus according to claims 2 or 3, wherein the LCD panel has an oblong shape, the light guiding unit comprises a plurality of light guide plates divided in a length-wise direction of the LCD panel, and the LED module is arranged at a length-wise lateral side of the light guide plate.

5. The display apparatus according to claims 2 or 3, wherein the light guiding unit comprises a plurality of light guide plates divided into a grid pattern.

6. The display apparatus according to claim 1, further comprising:
a light source driver to supply power to the LED modules; and
a light source controller to control the light source driver so that light from the LED modules can be scanned in sequence.

7. The display apparatus according to claim 1, further comprising:
a light source driver to supply power to the LED modules; and
a light source controller to control the light source driver so that power can be supplied to the LED modules based on an image to be displayed on the LCD panel.

8. A method of processing an image on a display apparatus comprising a liquid crystal display (LCD) panel, a plurality of light guide plates placed adjacent to the LCD panel and guiding incident light to the LCD panel, and a plurality of light emitting diode (LED) modules individually arranged at one lateral sides of the plurality of light guide plates and emitting light to the lateral sides, respectively, the method comprising:
identifying at least one compensation area of the LCD panel corresponding to an edge region of the light guide plate;
altering a level of brightness of an image displayed on the compensation area to compensate for non-uniform levels of brightness at the edge region.

9. The image processing method according to claim 8, wherein altering the level of brightness of an image comprises increasing the level of brightness of an image displayed on a compensation area, the compensation area corresponding to a top portion at a lateral side opposite to an incident lateral side of the light guide plate where light from the LED module enters.

10. The image processing method according to claim 8, wherein altering the level of brightness of an image comprises decreasing the level of brightness of an image displayed on a compensation area, the compensation area corresponding to a top portion at an incident lateral side of the light guide plate where light from the light emitting diode (LED) module enters.

11. The image processing method according to claim 9 or 10, wherein the LCD panel has an oblong shape, and further comprising dividing the light guide plates in a length-wise direction of the LCD panel.

12. The image processing method according to claim 8, further comprising driving the LED modules so that light from the LED modules can be scanned.

13. The image processing method according to claim 8, further comprising driving the LED modules based on an image displayed on the LCD panel.
